# EUROPÄISCHE PATENTSCHRIFT

(11) **EP 2 187 833 B1**
(45) Veröffentlichungstag und Bekanntmachung des Hinweises auf die Patenterteilung: **22.05.2019**
(21) Anmeldenummer: 08785047.5
(22) Anmeldetag: 24.07.2008
(51) Int. Cl.: A61C 13/00, A61C 5/70, A61C 5/77

(54) **VERFAHREN ZUM ENTWERFEN EINES ZAHNERSATZTEILS**
METHOD FOR DESIGNING A TOOTH REPLACEMENT PART
PROCÉDÉ POUR CONCEVOIR UN ÉLÉMENT DE PROTHÈSE DENTAIRE

(30) Priorität: 25.07.2007 DE 102007034653
(43) Veröffentlichungstag der Anmeldung: 26.05.2010
(73) Patentinhaber: Institut Straumann AG, 4002 Basel (CH)
(72) Erfinder: HOLZNER, Stephan, 80269 Schäftlarn (DE); WEBER, Gerhard, 86932 Pürgen (DE)
(74) Vertreter: Grünecker Patent- und Rechtsanwälte PartG mbB
(86) Internationale Anmeldenummer: PCT/EP2008/006094
(87) Internationale Veröffentlichungsnummer: WO 2009/012999

(56) Entgegenhaltungen:
- EP-A- 0 943 296
- EP-A- 1 661 529
- EP-A1- 0 943 296
- EP-A2- 1 661 529
- DE-A1- 10 145 104
- DE-A1- 10 145 104

## Beschreibung

Die Erfindung betrifft ein computerimplementiertes Verfahren zum Entwerfen eines Zahnersatzteils sowie ein computerlesbares Medium mit Instruktionen zum Durchführen des Verfahrens.

Aus dem Stand der Technik ist bekannt, einen Restzahnbereich nach der zahnärztlichen Präparation durch optische Abtastung direkt im Patientenmund oder durch optische Abtastung eines Modells, das die Situation im Mund des Patienten darstellt, zu vermessen. Die mit der optischen Abtastung gewonnenen Daten erlauben beispielsweise auch das Feststellen von Hinterschnitten am Restzahnbereich.

Weiterhin ist aus dem Stand der Technik bekannt, Modelle von Zahnersatzteilen digital zu modellieren. Hiermit können Zahnersatzteile mit hoher Präzision entworfen werden, so dass nach der Herstellung des Zahnersatzteils keine weiteren Bearbeitungen notwendig sind. Bei dieser Modellierung werden die Scandaten des Restzahnbereichs berücksichtigt.

EP 1 661 529 A2 offenbart ein Verfahren zur Erstellung eines zahnmedizinischen Geräts mit mehreren Komponenten, wobei ein Erzeugen eines ersten elektronischen Modells einer ersten zahnmedizinischen Komponente, ein Drucken eines ersten Wachsmodells der ersten zahnmedizinischen Komponente, das auf dem elektronischen Modell der ersten zahnmedizinischen Komponente basiert erfolgt. Dann erfolgt ein Gießen oder Pressen des ersten Wachsmodells, um eine erste gegossene zahnmedizinische Komponente zu bilden und ein Drucken eines zweiten Wachsmodells der zweiten zahnmedizinischen Komponente, das auf dem elektronischen Modell der zweiten zahnmedizinischen Komponente basiert und ein Gießen oder Pressen des zweiten Wachsmodells auf die erste gegossene zahnmedizinische Komponente, um das zahnmedizinische Gerät zu bilden.

DE 101 45 104 A1 offenbart ein Verfahren zur Herstellung von Zahnersatz aus einem dreidimensional vermessenen und digitalisierten Modell, wobei ein Einlesen der Daten des digitalisierten Modells, ein Beaufschlagen der Innenfläche des Oberflächenmodells mit einem vorgegebenen Offsetwert zur Bildung eines Zementspalts zwischen späterem Zahnersatz und Zahnstumpf und eine Berechnung eines Programms für eine Bearbeitung des Rohlings oder einer Form durch eine Werkzeugmaschine erfolgt.

Aufgabe der vorliegenden Erfindung ist es, ein computerimplementiertes Verfahren zum Entwerfen eines Zahnersatzteils und ein computerlesbares Medium mit entsprechenden Instruktionen zur Verfügung zu stellen, so dass eine große Flexibilität bei der Modellierung von Zahnersatzteilen besteht, die zu gut herstellbaren Zahnersatzteilen führt.

Diese Aufgabe wird gelöst mit einem Verfahren nach Anspruch 1 sowie einem computerlesbaren Medium nach Anspruch 10.

Bevorzugte Ausführungsformen sind in den abhängigen Ansprüchen offenbart.

Bei einem Verfahren wird ein Zahnersatzteil entworfen, das auf einen Restzahnbereich aufsetzbar sein soll. Eine Beabstandung zwischen dem Zahnersatzteil und dem Restzahnbereich ist vorgesehen, wobei geprüft wird, ob nach dem Vorsehen der Beabstandung ein oder mehrere Hinterschnitte in dem Zahnersatzteil vorhanden sind.

Durch die Prüfung auf Hinterschnitte wird erreicht, dass Zahnersatzteile leicht herstellbar werden, da entworfene, hinterschnittsfreie Zahnersatzteile beispielsweise kostengünstig mit 3-Achsfräsmaschinen herstellbar sind. Falls Hinterschnitte detektiert werden, kann eine Herstellung mit einer 3+1-, 4- oder 5-Achsfräsmaschine erfolgen, was jedoch teurer ist.

Hinterschnitte des Zahnersatzteils können durch die Form des Restzahnbereichs entstehen. Sie können jedoch auch z.B. durch das Vorsehen einer Beabstandung entstehen.

Während des Entwerfens eines Zahnersatzteils mit vorgesehener Beabstandung kann die Beabstandung flexibel gewählt werden, da sichergestellt ist, dass durch den an das Entwerfen anschließenden Schritt der Prüfung auf Hinterschnitte im Zahnersatzteil festgestellt werden kann, ob durch die Vorsehung der Beabstandung ein oder mehrere Hinterschnitte entstanden sind.

Durch die Prüfung des Zahnersatzteils hinsichtlich vorhandener Hinterschnitte nach dem Vorsehen der Beabstandung wird erreicht, dass Hinterschnitte, die durch eine Beabstandung entstehen, auf jeden Fall erkannt werden. Hinterschnitte, die durch die Form des Restzahnbereichs entstehen, können dann auch gleich miterkannt werden, so dass eine zusätzliche Prüfung des Zahnersatzteils vor dem Vorsehen der Beabstandung überflüssig (wenn gleich auch möglich) ist. Dadurch kann das Entwerfen des Zahnersatzteils mit geringerem Zeitaufwand erfolgen. Die vorgesehene Beabstandung kann einer besseren Passung von Zahnersatzteil und Restzahnbereich dienen.

Der anschließende Schritt der Prüfung erfolgt vorzugsweise automatisch nach dem Vorsehen der Beabstandung oder nach jeder Änderung oder Modifizierung einer Beabstandung.

Die vorgesehene Beabstandung umfasst mindestens zwei, drei, vier oder mehr Abstandsbereiche. Zwischen zwei benachbarten Abstandsbereichen der Beabstandung ist ein Übergangsbereich vorhanden, wobei vorzugsweise zwischen allen benachbarten Abstandsbereichen ein Übergangsbereich vorhanden ist.

Da die Beabstandung mehrere Abstandsbereiche besitzt, deren Oberflächen jeweils parallel zu der Oberfläche des Restzahnbereichs verlaufen, so ist vorgesehen, dass die Form des oder der Übergangsbereiche nur so gewählt werden kann, dass der oder die Übergangsbereiche bei einer Einschubrichtung des Zahnersatzteils z.B. senkrecht zur Basalebene, nicht über eine gedachte Ebene, die parallel zur Einschubrichtung und die durch das Ende des oder der Übergangsbereiche zur Präparationslinie hin, hinausragt. Beispielsweise kann die Form des oder der Übergangsbereiche so gewählt werden, dass die Oberfläche des Übergangsbereichs mit der Einschubrichtung des Zahnersatzteils einen Winkel von 2° - 3° bildet.

Der Übergangsbereich und/oder die Übergangsbereiche zwischen benachbarten Abstandbereichen können an verschiedenen Stellen des Übergangsbereichs/der Übergangsbereiche verschiedene und/oder gleiche Längen und/oder verschiedene und/oder gleiche Formen aufweisen. Die Länge eines Übergangsbereichs kann zwischen den beiden Enden des Übergangsbereichs gemessen werden. Beispielsweise kann die Länge eines Übergangsbereichs entlang des entsprechenden Umfangs eines Zahnstumpfs (der Umfang verläuft um die Zahnachse herum), verschiedene Werte aufweisen, um dadurch Hinterschnitte im herzustellenden Zahnersatzteil zu vermeiden und/oder um eine optimale Passform des Zahnersatzteils zu gewährleisten. Vorzugsweise kann der Übergang beispielsweise zwischen verschiedenen Längen eines Übergangsbereichs entlang des Umfangs kontinuierlich erfolgen, so dass sich keine Bereiche mit abrupten Veränderungen ergeben, die beispielsweise zu einer mechanischen Belastung des Zahnersatzteils führen können. Weitere Parameter, die der Übergangsbereich und/oder die Übergangsbereiche aufweisen können, können der Beabstandungsunterschied an den jeweiligen Enden eines Übergangsbereichs und/oder die Position des Übergangsbereichs oder der Übergangsbereiche sein. Auch diese Parameter können an verschiedenen Stellen des Übergangsbereichs/der Übergangsbereiche verschiedene und/oder gleiche Werte aufweisen.

Eine Änderung oder Modifizierung einer vorgesehenen Beabstandung und/oder eine Änderung oder Modifizierung des Übergangsbereichs/der Übergangsbereiche kann vorzugsweise so erfolgen, dass die Änderungen und/oder Modifizierungen, beispielsweise zur Entfernung von einem und/oder mehreren Hinterschnitten, minimal sind.

Durch zwei oder mehr Abstandsbereiche der vorgesehenen Beabstandung ist es möglich, z.B. die Gesamtdicke der Beabstandung in verschiedenen Bereichen zwischen Restzahnbereich und Zahnersatzteil unterschiedlich zu gestalten. Dies erlaubt eine besonders große Flexibilität bei dem Entwerfen des Zahnersatzteils. Ein vorhandener Übergangsbereich zwischen z.B. zwei Abstandsbereichen kann einer variableren Form der Beabstandung dienen. Vorzugsweise ist im Bereich der Präparationslinie die Dicke geringer als im restlichen Abstandsbereich oder in einem Teil davon.

Die zwei oder mehr Abstandsbereiche der Beabstandung besitzen unterschiedliche Dicken.

Die Beabstandung kann aus unterschiedlichen Abstandselementen aufgebaut sein, wobei die Abstandselemente beispielsweise als Schichten vorgesehen sein können. Die Schichten können beispielsweise sogenannte Zement- und Stumpflackschichten darstellen, wobei die sogenannte Zementschicht den Platz für den Zahnzement für eine optimale Haftung des Zahnersatzteils am Restzahnbereich enthalten kann und die sogenannte Stumpflackschicht eine weitere Schicht sein kann, die Platz für ein anderes Material oder auch für Zahnzement schaffen kann.

Durch die verschiedenen Abstandsbereiche oder auch durch die Verwendung unterschiedlicher Abstandselemente ist es möglich, die vorgesehene Beabstandung hinsichtlich des Restzahnbereichs und des Zahnersatzteils optimal und flexibel zu gestalten.

Bei dem Verfahren kann zudem überprüft werden, ob der eine oder die mehreren Hinterschnitte vor dem Vorsehen der Beabstandung im Zahnersatzteil vorhanden sind. Der oder die vorhandenen Hinterschnitte können entfernt werden.

Durch Überprüfung, ob in einem Zahnersatzteil bereits vor dem Vorsehen der Beabstandung ein oder mehrere Hinterschnitte vorhanden waren, kann z.B. festgestellt werden, dass die Beabstandung keinen Hinterschnitt erzeugt hat, sondern dieser bereits vor dem Vorsehen der Beabstandung vorhanden war. Entsprechend wäre es möglich, das Zahnersatzteil mit Hinterschnitt(en) vor dem Vorsehen der Beabstandung von dem oder den Hinterschnitten zu befreien. Ebenso wäre es möglich Hinterschnitte zu entfernen, die durch das Vorsehen der Beabstandung entstanden sind.

Vorteilhaft ist, dass bei Vorhandensein eines oder mehrerer Hinterschnitte ein automatischer Hinweis erfolgen kann, die Beabstandung zu ändern. Besonders vorteilhaft ist, dass mit Hilfe des automatischen Hinweises die Beabstandung automatisch so verändert werden kann, dass das Zahnersatzteil keinen Hinterschnitt aufweist.

Durch den automatischen Hinweis, eine Beabstandung zu ändern, kann gewährleistet werden, dass Zahnersatzteile ohne Hinterschnitt(e) entworfen werden. Erfolgt zudem ein automatischer Hinweis, die Beabstandung auf solche Weise vorzusehen, dass das Zahnersatzteil keinen Hinterschnitt aufweist, kann das Zahnersatzteil weniger zeitintensiv entworfen werden, da nicht erst verschiedene Änderungen der Beabstandung durchlaufen werden müssen, um eine Beabstandung zu finden, die keinen Hinterschnitt im Zahnersatzteil erzeugt.

Es kann sein, dass das Zahnersatzteil ohne die vorgesehene Beabstandung keinen Hinterschnitt aufweist.

Weiterhin ist ein Verfahren vorteilhaft, das die Innenform des Zahnersatzteils unter Verwendung von Daten einer optischen Abtastung des Restzahnbereichs in einem Kiefer oder durch optische Abtastung eines Modells des Restzahnbereichs bestimmen kann. Als Innenform des Zahnersatzteils ist hierbei die Fläche des Zahnersatzteils zu verstehen, die zum Restzahnbereich hin weist.

Vorteilhaft ist zudem, vorhandene Hinterschnitte anzuzeigen. Dies kann optisch, beispielsweise durch Graustufen, Schattierungen, Falschfarben, Zahlenwerte oder Konturen, z.B. mittels eines Displays oder eines Ausdrucks erfolgen. Die Daten zum Anzeigen des oder der Hinterschnitte können auch in einem Datensatz gespeichert werden. Die optische Anzeige mittels Graustufen, Schattierungen, Falschfarben, Zahlenwerten oder Konturen kann die Beabstandung auf dem Restzahnbereich, eine Ansicht des Zahnersatzteils mit der Beabstandung oder ein transparent dargestelltes Zahnersatzteil mit Beabstandung auf dem Restzahnbereich umfassen. Zudem kann ein optisches oder akustisches Signal erzeugt werden, das angibt, dass überhaupt irgendein oder mehrere Hinterschnitte vorhanden sind. Ein solches Signal erfolgt dann z. B. unabhängig von dem Ort des Hinterschnitts.

Durch die Darstellung vorhandener Hinterschnitte wird es einem Anwender ermöglicht, z.B. auf einfache Weise zu erkennen, in welchem Bereich des Zahnersatzteils ein Hinterschnitt auftritt und welche Ausmaße er annimmt. Zudem kann ein optisches oder akustisches Signal einen Anwender darauf aufmerksam machen, dass in einem entworfenen Zahnersatzteil ein Hinterschnitt vorhanden ist. Dies ist besonders dann vorteilhaft, wenn ein Hinterschnitt aufgrund einer Darstellung nicht sofort ersichtlich ist, da der Hinterschnitt z.B. auf einer nicht dargestellten Rückseite liegt.

Ein oder mehrere Datensätze, die beim Entwerfen eines Zahnersatzteils mittels eines oder mehrerer Computer erzeugt werden können, können das Zahnersatzteil beschreiben. Der oder die Datensätze eines Zahnersatzteils können Charakteristiken des Zahnersatzteils, des Restzahnbereichs oder der Beabstandung enthalten. Zudem können in dem oder den Datensätzen Informationen über das Material enthalten sein, aus dem das Zahnersatzteil bestehen soll oder welches Material in den Platz der Beabstandung eingebracht werden soll.

Solche Datensätze ermöglichen es einem Anwender in einfacher und schneller Weise auf Informationen zu einem Zahnersatzteil, zu einer vorgesehenen Beabstandung oder zu einem Restzahnbereich zuzugreifen. Weiterhin kann ein Zahnersatzteil mit solch einem Datensatz hergestellt werden (Fräsen oder jedes Rapid-Prototyping-Verfahren).

Der anschließende Schritt der Prüfung kann auch nur dann (d.h. in anderen Fällen nicht) zur Durchführung vorgesehen sein, wenn eine Beabstandung vorgesehen wird, die an mindestens zwei verschiedenen Stellen verschiedene Dicken aufweist, insbesondere, wenn in einem Bereich, der von der Präparationsgrenze entfernt ist, eine größere Beabstandung vorgesehen ist, als bei der Präparationsgrenze. Gerade durch z.B. solche Beabstandungen können Hinterschnitte erzeugt werden.

Bei einem weiteren Verfahren wird ein bereits entworfenes Zahnersatzteil bearbeitet. Das Zahnersatzteil kann einen oder mehrere Hinterschnitte aufweisen, wobei zwischen dem Zahnersatzteil und einem Restzahnbereich, auf den das Zahnersatzteil aufsetzbar sein soll, eine Beabstandung vorgesehen ist. Die Form der Beabstandung kann verändert werden, um den oder die Hinterschnitte des Zahnersatzteils zu entfernen.

Durch eine Bearbeitung eines entworfenen Zahnersatzteils ist es möglich, auch im Nachhinein Veränderungen an dem Zahnersatzteil selbst oder an der vorgesehenen Beabstandung oder an beidem vorzunehmen. Dadurch ergibt sich die Möglichkeit, ein optimal passendes Zahnersatzteil mit einer vorgesehenen Beabstandung zu erzeugen.

Die Form der Beabstandung kann durch Selektion von einem oder mehreren Bereichen der Beabstandung und anschließender Veränderung des oder der selektierten Bereiche verändert werden. Auch durch Selektion von einem oder mehreren Abstandselementen oder Teilen davon und anschließende Modifikation des Selektierten kann die Beabstandung bearbeitet bzw. modifiziert werden.

Die Form der Beabstandung in dem einen Bereich und/oder den mehreren Bereichen kann unterschiedlich und/oder gleich verändert werden. Durch eine beispielsweise unterschiedliche Veränderung der Form der Beabstandung in mehreren selektierten Bereichen, können Hinterschnitte vermieden werden und somit beispielsweise eine optimale Passform des Zahnersatzteils erreicht werden.

Die Form der Beabstandung kann beispielsweise durch Vergrößern oder Verkleinern der Dicke insgesamt oder in einem selektierten Bereich der Beabstandung verändert werden.

Durch diese variable Selektion und Veränderung der Form einer Beabstandung kann eine Beabstandung vorgesehen werden, die in optimaler Weise zu Zahnersatzteil und Restzahnbereich passt.

Weiterhin ist es vorteilhaft, die Form der Beabstandung automatisch, vorzugsweise unter Beachtung von Randparametern, zu verändern. Randparameter können beispielsweise Länge oder Dicke der Präparationslinie, Stabilität des Zahnersatzteils oder Korngröße des Zements sein.

Die automatische Veränderung der Form der Beabstandung kann zu einer Zeitersparnis beim Entwerfen und auch beim Bearbeiten eines bereits entworfenen Zahnersatzteils führen. Durch Einbeziehen der Randparameter kann zudem gewährleistet werden, dass das Zahnersatzteil mit der vorgesehenen Beabstandung vorgegebenen Kriterien entspricht.

Weiter umfasst die Beabstandung zwei, drei, vier oder mehr Abstandsbereiche, wobei vorzugsweise Ausdehnung und/oder Form eines oder mehrerer Übergangsbereiche zwischen Abstandsbereichen verändert werden kann. Die Änderung der Ausdehnung kann vorzugsweise unter Beachtung der Präparationslinie erfolgen, die beispielsweise eine minimale Länge nicht unterschreiten darf. Die minimale Länge der Präparationslinie kann
vorzugsweise 0,2 - 0,3 mm betragen. Die Änderung der Form des Übergangsbereichs kann im Hinblick auf Vermeidung eines Hinterschnitts erfolgen.

Die zwei oder mehr Abstandsbereiche der vorgesehenen Beabstandung ermöglichen beispielsweise die Dicke der Beabstandung unterschiedlich in den zwei oder mehr Abstandsbereichen zu gestalten und dadurch eine optimale Form der Beabstandung in Bezug zum Zahnersatzteil und zum Restzahnbereich zu erhalten. Es kann ein Übergangsbereich zwischen benachbarten Abstandsbereichen vorhanden sein, der variabel durch Änderung der Ausdehnung und/oder der Form gestaltet werden kann.

Die Übergangsbereiche zwischen benachbarten Abstandsbereichen können so verändert werden, dass sie an verschiedenen Stellen des Übergangsbereichs und/oder der Übergangsbereiche verschiedene und/oder gleiche Längen und/oder verschiedene und/oder gleiche Formen aufweisen. Die Länge eines Übergangsbereichs kann zwischen den beiden Enden des Übergangsbereichs gemessen werden. Beispielsweise kann die Länge eines Übergangsbereichs entlang des entsprechenden Umfangs eines Zahnstumpfs, verschiedene Werte aufweisen, wodurch Hinterschnitte im Zahnersatzteil vermieden werden können und wodurch beispielsweise eine optimale Passform des Zahnersatzteils gewährleistet werden kann.

Weiterhin können automatisch ein oder mehrere Vorschläge für die Veränderung der Form der Beabstandung erfolgen und vorzugsweise kann einer dieser Vorschläge ausgewählt und anschließend automatisch ausgeführt werden.

Durch den oder die automatischen Vorschläge für die Veränderung der Form einer Beabstandung und einer eventuellen anschließenden automatischen Ausführung des oder der Vorschläge, muss der Anwender nicht selbst die vorgesehene Beabstandung ändern, sondern kann auf den automatischen Vorschlag zurückgreifen, wodurch Zeit beim Entwerfen eines Zahnersatzteils oder Bearbeiten eines entworfenen Zahnersatzteils eingespart werden kann. Ein Vorschlag kann durch den Anwender ausgewählt werden oder ein Vorschlag kann automatisch anhand von vorgegebenen Kriterien (z. B. Stabilität oder Wandstärke des Zahnersatzteils) ausgewählt werden.

Nach dem Modifizieren der Form einer Beabstandung kann eine automatische Prüfung erfolgen, ob ein oder mehrere Hinterschnitte in dem Zahnersatzteil vorhanden sind.

Dadurch kann gewährleistet werden, dass beim Bearbeiten eines bereits entworfenen Zahnersatzteils mit einem oder mehreren Hinterschnitten die Form der Beabstandung so verändert wird, dass sich kein Hinterschnitt im Zahnersatzteil ergibt. Die automatische Prüfung kann erfolgen, ohne dass ein Anwender dies zur Kenntnis nimmt oder nehmen muss. Der Anwender kann informiert werden, wenn bei der automatischen Prüfung ein oder mehrere Hinterschnitte festgestellt werden. Der Anwender kann sich über alle Ergebnisse der automatischen Prüfung informieren lassen.

Bei einem weiteren beispielhaften Verfahren kann ein Zahnersatzteil, das auf einen Restzahnbereich aufsetzbar sein soll, mit dem Schritt entworfen werden, dass eine Beabstandung zwischen dem Zahnersatzteil und dem Restzahnbereich vorgesehen oder modifiziert wird, wobei das Vorsehen oder Modifizieren der Beabstandung nur so erfolgen kann, dass durch das Vorsehen oder Modifizieren der Beabstandung kein Hinterschnitt im Zahnersatzteil entsteht. Hierfür können entsprechende Maßnahmen vorgesehen sein, die sicherstellen, dass durch das Vorsehen/die Modifikation der Beabstandung kein Hinterschnitt entsteht.

Liegt ein hinterschnittsfreier Restzahnbereich vor, so kann die Beabstandung beispielsweise so vorgesehen sein oder modifiziert werden, dass sie parallel zur Oberfläche des Restzahnbereichs verläuft. Dann ist sie ebenfalls hinterschnittsfrei.

Bei der Modifikation einer Beabstandung können Grenzen vorgegeben werden beispielsweise in Form von Flächen (eben oder gekrümmt) oder Linien, über die hinweg die Oberfläche des Zahnersatzteils bei der Modifikation nicht hinweg bewegt werden darf, da ansonsten ein Hinterschnitt entstehen würde.

Zudem ist ein beispielhaftes Zahnersatzteil vorgesehen, das auf einen Restzahnbereich, zu dem das Zahnersatzteil gehört, aufsetzbar sein soll und zwar mit einer vorgesehenen Beabstandung dazu. Die Beabstandung des Zahnersatzteils weist einen ersten und zweiten Abstandsbereich und einen dazwischenliegenden Übergangsbereich auf, wobei es in dem Übergangsbereich keinen Hinterschnitt gibt. Ohne den Übergangsbereich kann das Zahnersatzteil einen Hinterschnitt aufweisen. Die Beabstandung des Zahnersatzteils kann auch drei, vier oder mehr Abstandsbereiche aufweisen und dazwischenliegende Übergangsbereiche, wobei es in den Übergangsbereichen keine Hinterschnitte gibt.

Die Erfindung betrifft auch einen computerlesbaren Datenträger, der Instruktionen umfasst, die eines der obigen oder weiter unten beschriebenen Verfahren durchführen, wenn sie in einen Computer eingelesen werden.

Die Zahnersatzteile können Inlays, Overlays, Onlays, Käppchen, Kronen, Primärkronen, Sekundärkronen, Brücken, Gerüste oder künstliche Gebisse (dritte Zähne) sein.

Bevorzugte Ausführungsformen der Erfindung sollen anhand der beiliegenden Figuren erläutert werden. Dabei zeigt:
- Figur 1:: einen Schnitt durch ein Zahnersatzteil mit Beabstandung, das auf einen Restzahnbereich aufgesetzt ist;
- Figur 2:: einen Schnitt durch ein Zahnersatzteil mit Beabstandung mit/ohne Übergangsbereich;
- Figur 3:: mögliche Randparameter der Beabstandung;
- Figur 4:: Ausdehnung und Form des Übergangsbereichs der Beabstandung in den verschiedenen Abstandsbereichen;
- Figur 5:: eine optische Darstellungsform der Hinterschnitte;
- Figur 6:: eine Darstellung eines Verlaufs von Präparationslinie und der beiden Linien eines Übergangsbereichs.

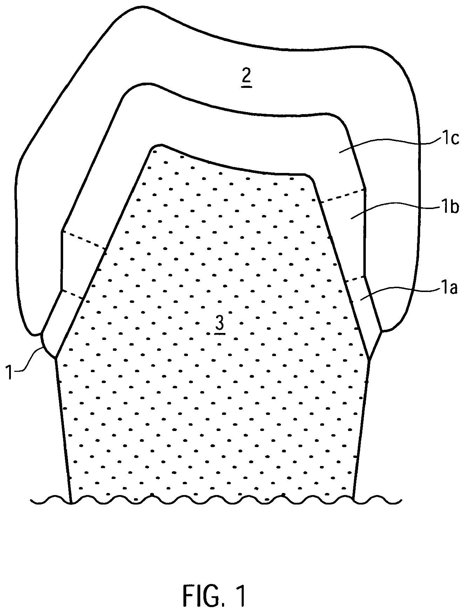

Figur 1 stellt einen schematischen Schnitt durch ein Zahnersatzteil 2 mit einer Beabstandung 1 dar. Die gezeigte Beabstandung 1 besitzt zwei Abstandsbereiche 1a, 1c sowie einen Übergangsbereich 1b. Die Beabstandung 1 kann einen, zwei, drei, vier, fünf oder mehr Abstandsbereiche umfassen, wobei zwischen jeweiligen Abstandsbereichen wiederum Übergangsbereiche vorgesehen sein können. In die Beabstandung 1 kann z.B. Zahnzement eingefüllt werden, um einen Halt des Zahnersatzteils 2 auf dem Restzahnbereich 3 zu gewährleisten. In einem Abstandsbereich ist die Dicke der Beabstandung jeweils konstant, kann aber auch innerhalb vorgegebener Toleranzen wie etwa 5%, 10% oder 20% variieren. Die Beabstandung kann (Soll-)Dicken von 10µm, 15µm, 20µm, 25µm oder auch 30µm aufweisen.

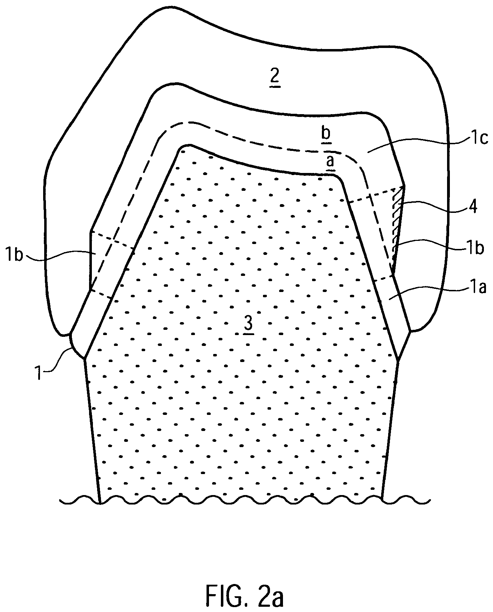

In Figur 2a ist ein schematischer Schnitt durch ein Zahnersatzteil gezeigt, bei dem die Beabstandung zwei Abstandsbereiche 1a, 1c sowie einen Übergangsbereich 1b aufweist. Je nach Form des Restzahnbereichs 3 und der Lage des Übergangsbereichs 1b, kann sich durch die vorgesehene Beabstandung 1 ein Hinterschnitt 4 im Zahnersatzteil 2 ergeben. Es kann aber auch sein, dass trotz der Beabstandung 1 kein Hinterschnitt im Zahnersatzteil 2 entsteht (siehe linker Teil des Übergangsbereichs 1b).

Die Beabstandung 1 ist durch zwei Abstandselemente a, b aufgebaut. Das Abstandselement a entspricht einem Zementspalt und das Abstandselement b einer Stumpflackschicht. Im Bereich der Präparationsgrenze ist nur das Abstandselement a, nicht jedoch b vorhanden. Das Abstandselement b hat im Abstandsbereich 1c eine konstante Dicke und im Übergangsbereich 1b eine zur Präparationsgrenze hin sich verringernde Dicke (hier beispielhaft bis auf Null).

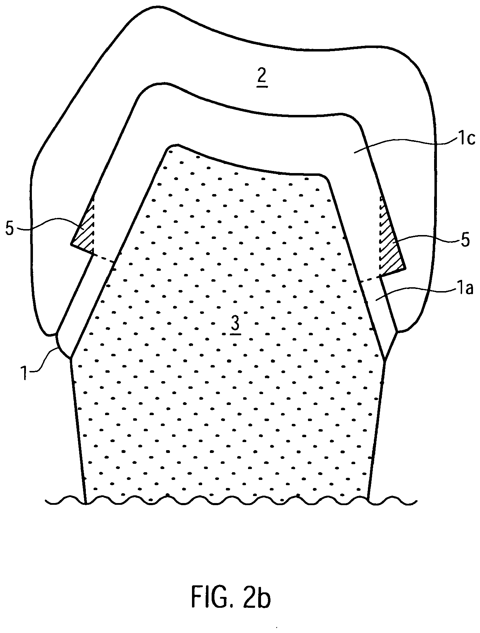

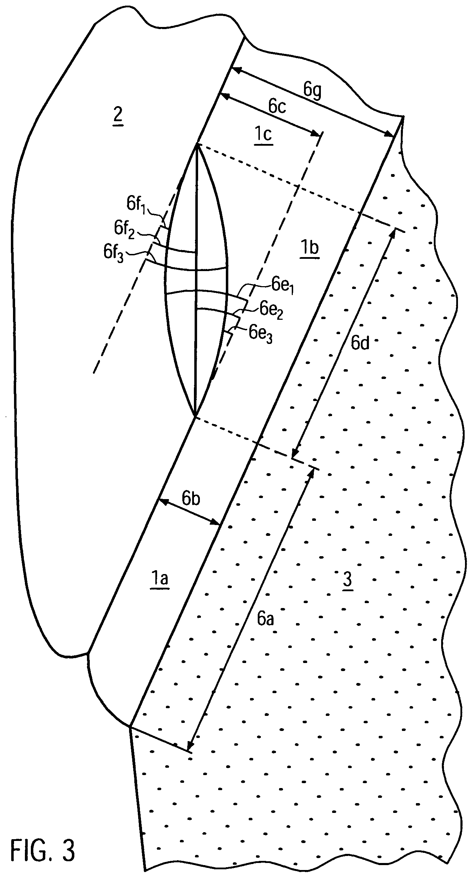

Figur 2b zeigt ebenfalls einen schematischen Schnitt durch ein Zahnersatzteil 2, bei dem die Beabstandung 1 zwei Abstandsbereiche 1a, 1c aufweist. Es liegt aber kein Übergangsbereich vor. Dadurch können sich ein oder mehrere Hinterschnitte 5 in dem Zahnersatzteil 2 ergeben. Hier ist gut zu erkennen, dass insbesondere durch das Vorsehen von einer Beabstandung 1 mit verschiedenen Dicken in den verschiedenen Abstandsbereichen Hinterschnitte 5 im Zahnersatzteil 2 erzeugt werden können, auch wenn der Restzahnbereich 3 selbst hinterschnittsfrei ist. Die Hinterschnitte 5 im Zahnersatzteil 2 lassen sich durch Übergangsbereiche zwar reduzieren oder entfernen, jedoch hängt dies konkret von den jeweiligen Parametern, die einen Übergangsbereich definieren, ab, wie etwa Länge des Übergangsbereichs, Beabstandungsunterschied an den jeweiligen Enden des Übergangsbereichs oder Position des Übergangsbereichs (siehe Fig. 3).

In Figur 3 sind mögliche Randparameter 6a-6g gezeigt, die beispielsweise bei einem automatischen Hinweis des Vorsehens der Beabstandung 1 beachtet werden können. Die Länge 6a der Präparationslinie (auch Präparationsgrenze genannt) ist im allgemeinen fest vorgegeben, um einen präzisen und gut passenden Abschluss zwischen Zahnersatzteil 2 und Restzahnbereich 3 zu erhalten, wobei eine minimale Länge der Präparationslinie gegeben sein kann, die nicht unterschritten werden darf. Die Dicke 6b der Beabstandung im Bereich der Präparationslinie kann durch den Korndurchmesser des zu verwendeten Zahnzements festgelegt sein. Der Beabstandungsunterschied 6c, gemessen an den jeweiligen Enden des Übergangsbereichs 1b, kann zum Definieren des Dickenunterschieds zwischen den beiden hier gezeigten Abstandsbereichen 1a, 1c herangezogen werden. Weiterhin kann die Länge 6d des Übergangsbereichs 1b variiert werden, wodurch Hinterschnitte vermieden werden können. Verschiedene Formen des Übergangsbereichs 1b können sich beispielsweise durch die Wahl unterschiedlicher Winkel 6e₁-6e₃ und 6f₁-6f₃ ergeben. Wenn die Winkel 6e₂ und 6f₂ gleich groß sind, kann sich für die Form des Übergangsbereichs in der dargestellten Schnittansicht eine gerade Linie ergeben. Die Winkel 6e und 6f können aber auch unterschiedlich groß sein. Die Form des Übergangsbereichs kann in der Schnittansicht gerade, gebogen (konkaver oder konvexer Teil des Zahnersatzteils) oder beliebig geformt sein. Die Dicke der Beabstandung im Abstandsbereich 1c ist mit 6g bezeichnet.

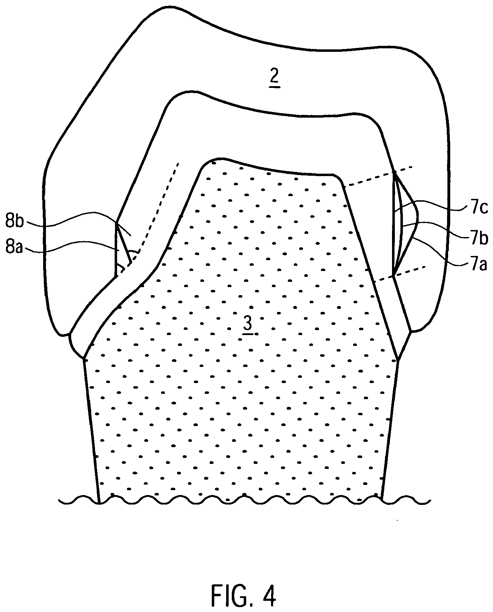

In Figur 4 sind verschiedene Formen 7a-7c und verschiedene Ausdehnungen 8a, 8b des Übergangsbereichs 1b der Beabstandung 1 dargestellt. Durch Verändern der Ausdehnung des Übergangsbereichs, z.B. unter Beibehaltung oder Veränderung des Winkels (s. Fig. 4) zwischen Restzahnbereich und Oberfläche des Übergangsbereichs, kann das Auftreten eines Hinterschnitts durch die vorgesehene Beabstandung 1 vermieden werden. Die Veränderung der Ausdehnung 8a, 8b des Übergangsbereichs kann beispielsweise unter Bebehaltung des Winkels, den der Übergangsbereich mit einer gedachten Linie des einen Abstandselements einnimmt, erfolgen. Die Form 7a-7c des Übergangsbereichs 1b kann verändert werden, um einen Hinterschnitt im Zahnersatzteil durch die vorgesehene Beabstandung 1 zu vermeiden, wenn beispielsweise die Länge 6d des Übergangsbereichs vorgegeben ist.

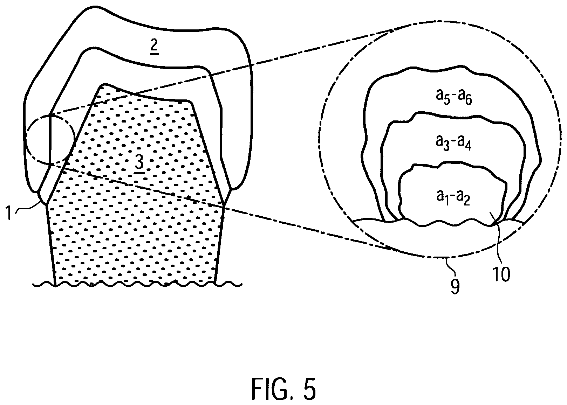

Figur 5 zeigt eine beispielhafte Darstellungsform 9 eines Hinterschnitts eines Zahnersatzteils 2. Der linke Teil von Figur 5 zeigt das auf den Restzahnbereich aufgesetzte Zahnersatzteil mit vorgesehener Beabstandung, wobei dieses Zahnersatzteil einen Hinterschnitt aufweist. Im rechten Teil von Figur 5 ist gezeigt, wie solch ein Hinterschnitt graphisch dargestellt werden kann. Beispielhaft ist der Hinterschnitt anhand von Konturen 10 dargestellt, wobei in dem gezeigten Fall die unterschiedlichen Bereiche verschiedene Ausprägungen des Hinterschnitts darstellen, die zudem mittels alphabetischer Bereichsangaben bezeichnet werden können. Die unterschiedlichen Konturbereiche können aber auch Falschfarben oder Graustufen oder Schattierungen oder Zahlenwerte oder ähnliches aufweisen. Es kann auch eine Kombination der unterschiedlichen Darstellungsformen verwendet werden.

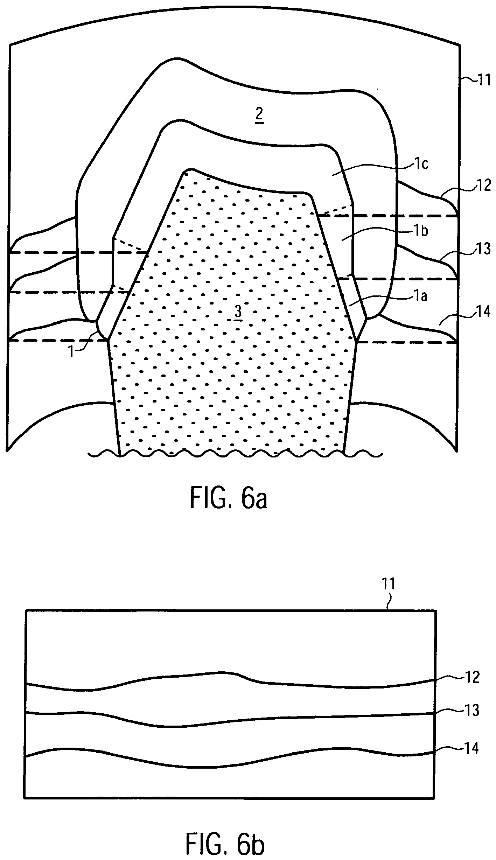

In Figur 6a ist eine beispielhafte Übertragung des Verlaufs von Präparationslinie 14 und der beiden Linien eines Übergangsbereichs 12, 13 auf einen Zylindermantel 11, der einen Restzahnbereich 3 mit aufgesetztem Zahnersatzteil 2 umgibt, dargestellt. Figur 6b zeigt den Verlauf der entsprechenden Kurven auf dem abgewickelten Zylindermantel. Es ist beispielsweise auch möglich, dass auf dem Zylindermantel solche Bereiche kenntlich gemacht werden, in denen Hinterschnitte auftreten.

Beispielsweise kann bei Durchführung eines Verfahrens ein Zahnersatzteil mit einer Beabstandung vorgesehen werden, wobei das entworfene Zahnersatzteil auf einen Restzahnbereich aufsetzbar sein soll und das Zahnersatzteil, wie beispielsweise in Fig. 2a dargestellt, einen Hinterschnitt 4 aufweisen kann. Dieser Hinterschnitt 4 kann bei einer Prüfung des Zahnersatzteils 2 hinsichtlich möglicherweise vorhandener Hinterschnitten festgestellt werden.

Die Prüfung des entworfenen Zahnersatzteils hinsichtlich möglicherweise vorhandener Hinterschnitte kann mittels eines oder mehrerer vorhandener Datensätze, die das entworfene Zahnersatzteil beschreiben, beispielsweise aus unterschiedlichen Richtungen z.B. bezüglich einer Achse des Zahnersatzteils erfolgen. Aus den unterschiedlichen Richtungen können sich verschiedene Ansichten des Zahnersatzteils ergeben und auch der oder die Hinterschnitte können unterschiedlich ausgeprägt, vorhanden oder nicht vorhanden sein. Beispielsweise können sich bei einer Prüfungsrichtung von 10 Grad, 20 Grad oder 30 Grad z.B. senkrecht zur Basalebene (siehe gewellte Linie in den Figuren; Eintrittsebene des Zahn in das Zahnfleisch) keine Hinterschnitte ergeben, wohingegen sich bei einer Prüfungsrichtung von 0 Grad ein oder mehrere Hinterschnitte ergeben können.

Die Prüfungsrichtung kann beispielsweise durch eine bereits bekannte Einschubrichtung des Zahnersatzteils auf den Restzahnbereich gegeben sein, wobei diese Einschubrichtung z.B. durch die Ausrichtungsmöglichkeit des verwendeten Fräswerkzeugs bedingt sein kann. Die Einschubrichtung des Zahnersatzteils auf den Restzahnbereich kann auch entsprechend vorhandener Hinterschnitte gewählt werden.

Der oder die durch Prüfung des entworfenen Zahnersatzteils gefundenen Hinterschnitte können graphisch dargestellt werden, wie dies beispielshaft in Fig. 5 gezeigt wird. Um z.B. einen vorhandenen Hinterschnitt zu entfernen, kann die Form der Beabstandung verändert werden, es kann aber auch ein oder mehrere Vorschläge für die Veränderung der Form der Beabstandung erfolgen, wovon einer dieser Vorschläge ausgewählt und anschließen automatisch ausgeführt werden kann.

Zur Durchführung von einem oder mehreren der Verfahren ist ein Computer vorgesehen.

## Patentansprüche

1. Computerimplementiertes Verfahren zum Entwerfen eines Zahnersatzteils (2), das auf einen Restzahnbereich (3) aufsetzbar sein soll, mit den Schritten:
- Vorsehen einer Beabstandung (1) zwischen dem Zahnersatzteil und dem Restzahnbereich
- anschließende Prüfung, ob ein oder mehrere Hinterschnitte (4, 5) in Bezug auf eine Einschubrichtung des Zahnersatzteils in dem Zahnersatzteil vorhanden sind,
wobei die Beabstandung zwei, drei, vier oder mehr Abstandsbereiche (1a, 1c) umfasst, deren Oberflächen jeweils parallel zur Oberfläche des Restzahnbereichs verlaufen und wobei mindestens zwei Abstandsbereiche unterschiedliche Dicken besitzen,
wobei zwischen zwei benachbarten Abstandsbereichen ein Übergangsbereich (1b) vorhanden ist, wobei vorzugsweise zwischen allen benachbarten Abstandsbereichen ein Übergangsbereich vorhanden ist,
**dadurch gekennzeichnet, dass**
eine Form des oder der Übergangsbereiche nur so gewählt werden kann, dass der oder die Übergangsbereiche nicht über eine gedachte Ebene, die parallel zu der Einschubrichtung des Zahnersatzteils ist und die durch ein zu einer Präparationslinie hinweisendes Ende des oder der Übergangsbereiche geht, hinausragt, wobei das Ende des oder der Übergangsbereiche das Ende des oder der Übergangsbereiche auf dem Zahnersatzteil betrifft, so dass ein Hinterschnitt vermieden wird.

2. Verfahren nach Anspruch 1, wobei der und/oder die Übergangsbereiche zwischen benachbarten Abstandsbereichen an verschiedenen Stellen des Übergangsbereichs/der Übergangsbereiche verschiedene und/oder gleiche Längen und/oder verschiedene und/oder gleiche Formen aufweisen.

3. Verfahren nach Anspruch 1 oder 2, wobei die Beabstandung aus unterschiedlichen Abstandselementen aufgebaut ist, wobei diese Abstandselemente beispielsweise Schichten sind und vorzugsweise zwei, drei, vier oder mehr Abstandselemente vorgesehen sind,
und/oder wobei geprüft wird, ob ein oder mehrere Hinterschnitte vor dem Vorsehen der Beabstandung im Zahnersatzteil vorhanden sind.

4. Verfahren nach einem der Ansprüche 1 bis 3, wobei der eine oder die mehreren Hinterschnitte entfernt werden,
und/oder wobei bei Vorhandensein eines oder mehrerer Hinterschnitte ein automatischer Hinweis erfolgt, wie die Beabstandung geändert werden kann, so dass kein Hinterschnitt mehr vorliegt,
und/oder wobei mit Hilfe des automatischen Hinweises die Beabstandung automatisch so verändert wird, dass das Zahnersatzteil keinen Hinterschnitt aufweist.

5. Verfahren nach Anspruch 1 bis 4, wobei das Zahnersatzteil ohne vorgesehene Beabstandung keinen Hinterschnitt aufweist,
und/oder wobei eine Innenform des Zahnersatzteils unter Verwendung von Daten einer optischen Abtastung des Restzahnbereichs in einem Kiefer oder eines Modells des Restzahnbereichs bestimmt wird,
und/oder wobei mittels eines oder mehrerer Computer ein Datensatz oder mehrere Datensätze erzeugt werden, welche das Zahnersatzteil beschreiben.

6. Verfahren nach einem der Ansprüche 1 bis 5, wobei der oder die Hinterschnitte angezeigt werden,
insbesondere wobei der oder die Hinterschnitte durch eine oder mehrere der folgenden Möglichkeiten angezeigt werden können: Graustufen; Farbstufen; Falschfarben; Schraffuren; Zahlenwerte; Buchstaben, Konturen.

7. Verfahren nach Anspruch 1 oder 6, wobei eine Form der Beabstandung durch Selektion von einem oder mehreren Bereichen der Beabstandung und anschließende Veränderung des oder der Bereiche verändert wird,
und/oder wobei die Form der Beabstandung in dem einen und/oder den mehreren Bereichen unterschiedlich und/oder gleich verändert wird,
und/oder wobei die Form der Beabstandung durch Vergrößern oder Verkleinern der Dicke der Beabstandung verändert wird.

8. Verfahren nach einem der Ansprüche 1 bis 7, wobei eine Veränderung einer Form der Beabstandung automatisch, vorzugsweise unter Beachtung von Randparametern (6a - 6d, 6e₁ - 6e₃, 6f₁ - 6f₃, 6g), erfolgt,
insbesondere wobei die Übergangsbereiche zwischen benachbarten Abstandsbereichen so verändert werden können, dass sie an verschiedenen Stellen der Übergangsbereiche verschiedene und/oder gleiche Längen und/oder verschiedene und/oder gleiche Formen aufweisen.

9. Verfahren nach einem der Ansprüche 1 bis 8, wobei automatisch ein oder mehrere Vorschläge für eine Veränderung einer Form der Beabstandung erfolgen, und vorzugsweise einer dieser Vorschläge ausgewählt und anschließend automatisch ausgeführt wird,
und/oder wobei nach jeder Modifikation der Form der Beabstandung eine automatische Prüfung erfolgt, ob ein oder mehrere Hinterschnitte in dem Zahnersatzteil vorhanden sind.

10. Computerlesbares Medium mit Instruktionen an einen oder mehreren Computer zum Ausführen eines oder mehrerer der Verfahren nach den Ansprüchen 1 bis 9.

## Claims

1. Computer-implemented method for designing a tooth replacement part (2), which is intended to be mountable on a residual area (3), with the steps:
- providing a spacing (1) between the tooth replacement part and the residual tooth area
- subsequent examination whether one or more undercuts (4, 5) with respect to an insertion direction of the tooth replacement part exist in the tooth replacement part,
wherein the spacing comprises two, three, four or more spacing areas (1a, 1c), whose surfaces extend each parallel to the surface of the residual tooth area and wherein at least two spacing areas have different thicknesses,
wherein a transition area (1b) is provided between two neighbouring spacing areas, wherein preferably between all neighbouring spacing areas a transition area is provided,
**characterised in that**
a shape of the transition area or of the transitions areas can only be chosen such that the transition area or the transitions areas do not project beyond an imaginary plane, the plane being parallel to the insertion direction and going through an end of the transition area or the transitions areas pointing towards a preparation line, wherein the end of the transition area or of the transitions areas concerns the end of the transition area or the transitions areas on the tooth replacement part, such that an undercut is avoided.

2. Method of claim 1, wherein the transition area and/or the transition areas between neighbouring spacing areas have at various locations of the transition area/the transition areas different and/or equal lengths and/or different and/or equal shapes.

3. Method of claim 1 or 2, wherein the spacing is composed of various spacing elements, wherein these spacing elements are, for example, layers, and preferably two, three, four or more spacing elements are provided,
and/or wherein it is examined whether one or more undercuts exist in the tooth replacement part prior to provision of the spacing.

4. Method of one of claims 1 to 3, wherein the one or the more undercuts are removed,
and/or wherein by existence of one or more undercuts, an automatic indication is provided of how the spacing may be modified such that no undercut exists anymore,
and/or wherein with aid of the automatic indication, the spacing automatically is modified such that the tooth replacement part has no undercut.

5. Method of claim 1 to 4, wherein the tooth replacement part has no undercut without any spacing being provided,
and/or wherein making use of data of an optical scanning the residual tooth area in a jaw or a model of the residual tooth area, an interior shape of the tooth replacement part is determined,
and/or wherein one data record or more data records describing the tooth replacement part are generated by one or more computers.

6. Method according to one of claims 1 to 5, wherein the undercut or the undercuts are indicated,
especially wherein the undercut or the undercuts may be displayed by one or more of the following possibilities: gray scale values; colour grades; pseudocolours; hatchings; numerical values; letters; contours.

7. Method of claim 1 or 6, wherein a shape of the spacing is modified by selecting one or more areas of the spacing and by subsequent modification of the area or the areas,
and/or wherein the shape of the spacing is modified differently and/or identically in the one area and/or of the more areas,
and/or wherein the shape of the spacing is modified by enlarging or reducing the thickness of the spacing.

8. Method of one of claims 1 to 7, wherein a modification of a shape of the spacing is done automatically, preferably with regard to boundary parameters (6a - 6d, 6e₁ - 6e₃, 6f₁ - 6f₃, 6g), especially wherein the transition areas between neighbouring spacing areas may be modified such that they have at different locations of the transition areas different and/or equal lengths and/or different and/or equal shapes.

9. Method of one of claims 1 to 8, wherein automatically one or more suggestions for a modification of a shape of the spacing are made, and preferably one of these suggestions is selected and subsequently automatically performed,
and/or wherein after each modification of the shape of the spacing an automatic examination is performed, whether one or more undercuts exists in the tooth replacement part.

10. Computer-readable medium with instructions to one or more computers for execution of one or more of the methods of claims 1 to 9.

## Revendications

1. Procédé mis en oeuvre par ordinateur, pour la conception d'une pièce de prothèse dentaire (2), qui doit pouvoir être appliquée sur une zone de dent résiduelle (3), comprenant les étapes consistant à :
- prévoir un espacement (1) entre la pièce de prothèse dentaire et la zone de dent résiduelle,
- vérifier ensuite la présence ou non dans la pièce de prothèse dentaire, d'une ou de plusieurs contre-dépouilles (4, 5) par rapport à une direction d'insertion de la pièce de prothèse dentaire, procédé
d'après lequel l'espacement comprend deux, trois, quatre zones d'espacement (1a, 1c) ou davantage, dont les surfaces externes s'étendent respectivement parallèlement à la surface externe de la zone de dent résiduelle, et au moins deux zones d'espacement présentent des épaisseurs différentes,
et d'après lequel il existe une zone de transition (1b) entre deux zones d'espacement voisines, une zone de transition existant de préférence entre toutes les zones d'espacement voisines,
**caractérisé en ce qu'**une forme de la ou des zones de transition ne peut être choisie que de manière telle, que la ou les zones de transition ne dépassent pas d'un plan fictif, qui est parallèle à la direction d'insertion de la pièce de prothèse dentaire et qui passe par une extrémité de la ou des zones de transition, dirigée vers une ligne de préparation,
l'extrémité de la ou des zones de transition concernant l'extrémité de la ou des zones de transition sur la pièce de prothèse dentaire, de manière à éviter une contre-dépouille.

2. Procédé selon la revendication 1, d'après lequel la et/ou les zones de transition entre des zones d'espacement voisines présentent en différents endroits de la zone de transition/des zones de transition, des longueurs différentes et/ou identiques, et/ou des formes différentes et/ou identiques.

3. Procédé selon la revendication 1 ou la revendication 2, d'après lequel l'espacement est constitué par différents éléments d'espacement, ces éléments d'espacement étant par exemple des couches, et deux, trois, quatre éléments d'espacement ou davantage étant de préférence prévus,
et/ou d'après lequel on vérifie s'il existe une ou plusieurs contre-dépouilles avant de prévoir l'espacement dans la pièce de prothèse dentaire.

4. Procédé selon l'une des revendications 1 à 3, d'après lequel ladite une ou les plusieurs contre-dépouilles sont éliminées,
et/ou d'après lequel dans le cas de l'existence d'une ou de plusieurs contre-dépouilles, il est produit une indication automatique indiquant comment il est possible de faire varier l'espacement de manière à ne plus avoir de contre-dépouille,
et/ou d'après lequel à l'aide de l'indication automatique, l'espacement est modifié automatiquement de manière telle que la pièce de prothèse dentaire ne présente pas de contre-dépouille.

5. Procédé selon les revendications 1 à 4, d'après lequel la pièce de prothèse dentaire, sans espacement prévu, ne présente pas de contre-dépouille,
et/ou d'après lequel une forme intérieure de la pièce de prothèse dentaire est déterminée en utilisant des données d'un balayage ou scannage optique de la zone de dent résiduelle dans une mâchoire, ou d'un modèle de la zone de dent résiduelle,
et/ou d'après lequel on produit, au moyen d'un ou de plusieurs ordinateurs, un jeu de données ou plusieurs jeux de données, qui décrivent la pièce de prothèse dentaire.

6. Procédé selon l'une des revendications 1 à 5, d'après lequel la ou les contre-dépouilles sont visualisées,
notamment d'après lequel la ou les contre-dépouilles peuvent être visualisées par une ou plusieurs des possibilités suivantes : niveaux de gris ; niveau de couleurs ; fausse couleur ; hachures ; valeurs chiffrées ; caractères, contours.

7. Procédé selon la revendication 1 ou la revendication 6, d'après lequel une forme de l'espacement est modifiée par sélection d'une ou de plusieurs zones de l'espacement, suivie d'une modification de l'une ou des zones,
et/ou d'après lequel la forme de l'espacement dans ladite une et/ou dans lesdites plusieurs zones est modifiée différemment et/ou de manière identique,
et/ou d'après lequel la forme de l'espacement est modifiée par augmentation ou diminution de l'épaisseur de l'espacement.

8. Procédé selon l'une des revendications 1 à 7, d'après lequel une modification d'une forme de l'espacement est effectuée de manière automatique, de préférence en tenant compte de paramètres marginaux (6a-6d, 6e₁-6e₃, 6f₁-6f₃, 6g),
notamment d'après lequel les zones de transition entre des zones d'espacement voisines peuvent être modifiées de manière telle, qu'elles présentent, en des endroits différents des zones de transition, des longueurs différentes et/ou identiques, et/ou des formes différentes et/ou identiques.

9. Procédé selon l'une des revendications 1 à 8, d'après lequel sont produites automatiquement une ou plusieurs propositions pour une modification d'une forme de l'espacement, et une de ces propositions est de préférence choisie et ensuite exécutée automatiquement, et/ou d'après lequel après chaque modification de la forme de l'espacement, est effectuée une vérification automatique de la présence d'une ou de plusieurs contre-dépouilles dans la pièce de prothèse dentaire.

10. Support lisible par ordinateur avec des instructions pour un ou plusieurs ordinateurs en vue d'exécuter un ou plusieurs des procédés selon les revendications 1 à 9.
